# EUROPEAN PATENT SPECIFICATION

(11) **EP 2 759 279 B1**
(45) Date of publication and mention of the grant of the patent: **24.01.2018**
(21) Application number: 13152447.2
(22) Date of filing: 24.01.2013
(51) Int. Cl.: A61C 13/12, A61C 8/00

(54) **Anchoring device between cylinders and spacers of position keys for dental implants**
Ankervorrichtung zwischen Zylindern und Abstandhaltern von Positionsschlüsseln dentaler Implantate
Dispositif d'ancrage entre les cylindres et les éléments d'écartement des touches de position pour implants dentaires

(43) Date of publication of application: 30.07.2014
(73) Proprietor: Kulzer GmbH, 63450 Hanau (DE)
(72) Inventor: Piasini, Bruno, 23020 MONTAGNA IN VALTELLINA - SONDRIO - (IT); Scotti, Antonio Maria, 20900 MONZA E BRIANZA (IT)
(74) Representative: Martegani, Franco

(56) References cited:
- EP-A1- 2 481 371
- EP-A2- 1 712 199
- WO-A1-02/062257
- WO-A1-2006/038877
- WO-A1-2011/040977
- WO-A2-2008/044919
- US-A- 4 260 383
- US-A1- 2004 018 469
- US-A1- 2004 142 300

## Description

The present invention relates to a device suitable for the temporary anchorage between cylinders and spacers of keys used in the positioning of dental implants.

### Field of the invention

The field of invention relates to equipment used for transferring, on a model, the position of dental implants situated in a patient's mouth in order to effect the fixing of the superstructures.

In this type of application, the problem arises of maintaining the original position of dental implants to be transferred to the operating model, as positioned inside the patient's mouth. For this purpose, spacers are used, which are anchored, at the head or in correspondence with their ends, to the respective cylinders that reproduce the position of the implants on the key. The relative fixing between spacers and cylinders is obtained with the use of composite or gypsum-based materials, whose function is to firmly anchor the head of the spacer onto the body of the respective cylinder.

### Background of the invention

At present, the single spacer is held in position on the cylinder it must sustain, by the fingers of the operator who is compelled to manually keep the spacer in its correct operating position for the whole time necessary for anchoring it onto the body of the cylinder. It is evident, however, that this operation is not only laborious, but also difficult to complete satisfactorily, as the spaces available in the patient's mouth and small dimensions of the spacers and cylinders hinder the accurate implementation of this coupling.

In addition, there are also difficulties due to the fact that the operator always has one hand engaged for holding the spacer in position, at least until it has been firmly anchored to the body of the cylinders of the implant.

WO 2008/044919 A2 describes an assembly comprising at least one fixing device to be attached to an implant.

### Summary of the invention

An objective of the invention is to provide a device suitable for simplifying the relative positioning operations described between spacers and cylinders, also effectively contributing to the anchoring precision and thus avoiding inaccuracies, responsible for undesired positioning errors of the original implant when it is transferred to the operating model.

A further objective of the invention is to hold the spacers in the patient's mouth without requiring the manual intervention of the operator.

These and other objectives are achieved with the anchoring device of the invention between cylinders and spacers of position keys of dental implants composed of cylinders and spacers, characterized in that it is equipped with means suitable for temporarily holding said cylinders and spacers in their relative position, corresponding to that of the dental implant.

According to the invention, said means consist of a first ring, destined for being engaged on the body of said cylinder, in addition to at least a second ring which is engaged on a first spacer of the position key and joined to the previous ring by means of a bar.

In accordance with the invention, said means may also comprise a third ring suitable for being engaged on a second spacer of the above-mentioned position key, with a bar for joining said third ring to the above-mentioned first ring, the latter assembled on said cylinder. The same rings of the device of the invention also have an axial cut, suitable for favouring their insertion on the body of the spacers and cylinders of the position key.

The invention extends to the position key for dental implants provided with the above anchoring device.

With respect to the systems used in the known art, the device of the invention offers the advantage of being able to be pre-assembled on the spacer, with a rapid and simple operation effected outside the patient's mouth. The device of the invention is then also fixed to the respective cylinder situated in the oral cavity with equally rapid and simple operations, thus providing a temporary anchorage which holds the cylinders of the implant and spacers forming the position key, in the correct relative position.

A further advantage lies in the fact that the device of the invention maintains the reciprocal positioning between the cylinders and spacers for the whole time necessary for effecting the definitive anchorage of the position key, without having to resort to additional manual interventions for this purpose.

Furthermore, thanks to the invention, the operator can easily complete the positioning of the position key in the mouth, correcting any possible coupling errors between cylinders and spacers before proceeding with their reciprocal definitive fixing.

### Brief description of the drawings

These and other objectives, advantages and characteristics will appear evident from the following description of some preferred embodiments of the device of the invention shown, for purely illustrative and non-limiting purposes, in the figures of the enclosed drawings, in which:
- figure 1 is a perspective view, lingual or palatal side, of a position key for dental implants, provided with the device of the invention;
- figure 2 is a perspective view, labial side, of a position key provided with a variant of the device of the invention;
- figures 3 and 4 illustrate the device of the invention, as used on the key of figure 1, in a front and side view respectively;
- figures 5 and 6, illustrate a variant of the device of the invention, as assembled on the key of figure 2;
- figures 7 and 8 illustrate assembly phases of the device of figures 3 and 4 on the key of figure 1;
- figure 9 illustrates the detail of the device of figures 5 and 6, as anchored on the central cylinder and on the spacers of the key of figure 2;

### Detailed description of the drawings

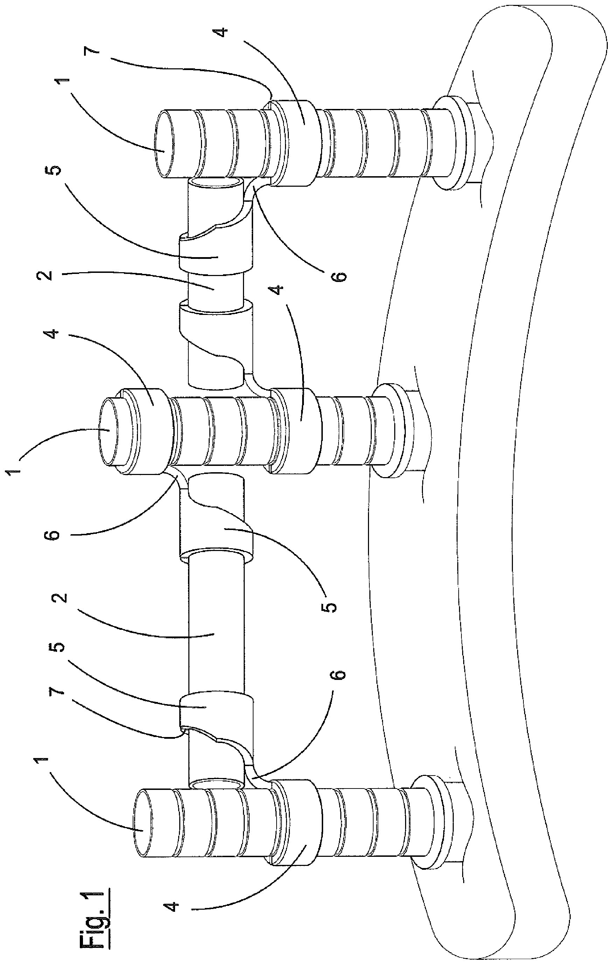

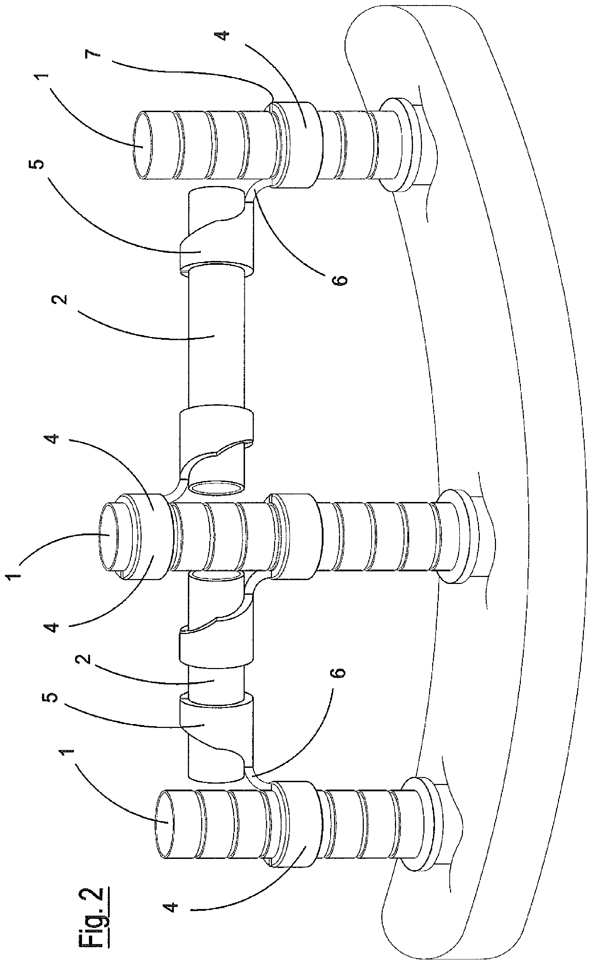

The position key illustrated in figures 1 and 2 is composed of a plurality of cylinders 1, which exert the function of defining the position, in the patient's mouth, of the respective implants and reproducing, on an operating model, their position thus defined.

In order to sustain the cylinders 1 between each other, maintaining their correct relative positioning on the operating model, these are fixed to respective spacers 2, arranged transversally with respect to the longitudinal axis of the same cylinders 1 and anchored at the head to the body of the same.

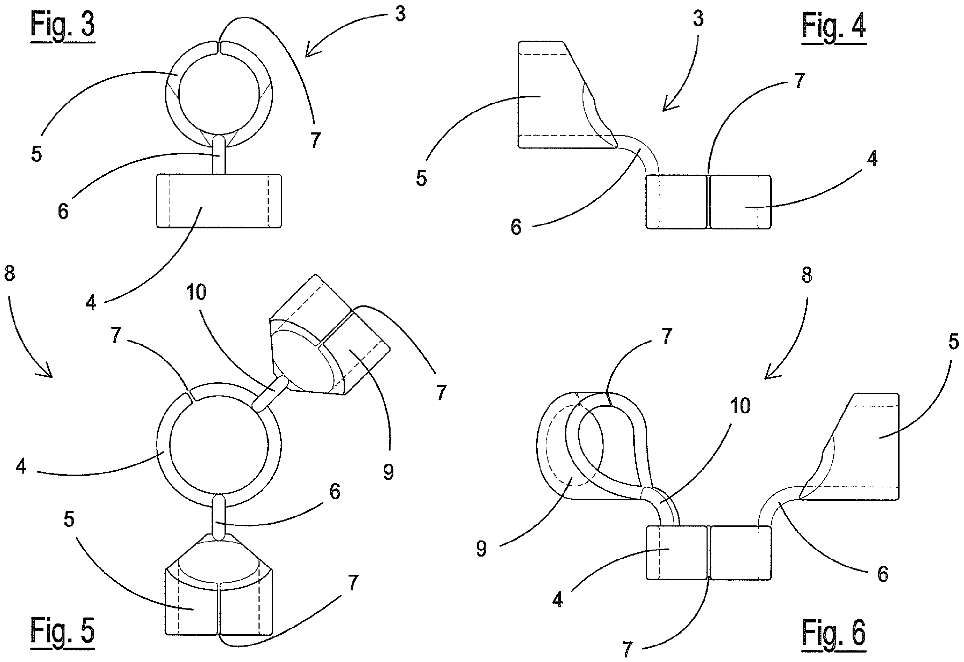

In order to maintain the temporary relative positioning between these elements 1 and 2 before being definitively fixed (effected by means of suitable composite or gypsum-based materials), use is made of the device of the invention, indicated as a whole with 3 in figures 3 and 4. In particular, the device 3 consists of a body made of a single piece of non-rigid plastic material, which comprises a first ring 4 and a second ring 5, reciprocally joined by a flexible bar 6.

The elasticity of the plastic material used for producing the device 3 is advantageously such as to allow dimensional and shape variations between the above-mentioned rings 4 and 5 to be compensated, in relation to the cylinders 1 and spacers 2. For the same purpose, i.e. for favouring the deformation of the rings 4 and 5 when being inserted on the body of the cylinders and spacers of the position key, the same rings 4, 5 have an axial cut 7, which allows them to be enlarged and, in this way, exert a retention force on the outer surface of the respective cylinders and spacers.

In the variant of figures 5 and 6, in addition to the above-mentioned rings 4 and 5, the device 8 of the invention may also have a third ring 9, equipped with a respective flexible fixing bar 10 to the ring 4 which supports the cylinder 1 of the key of figure 2.

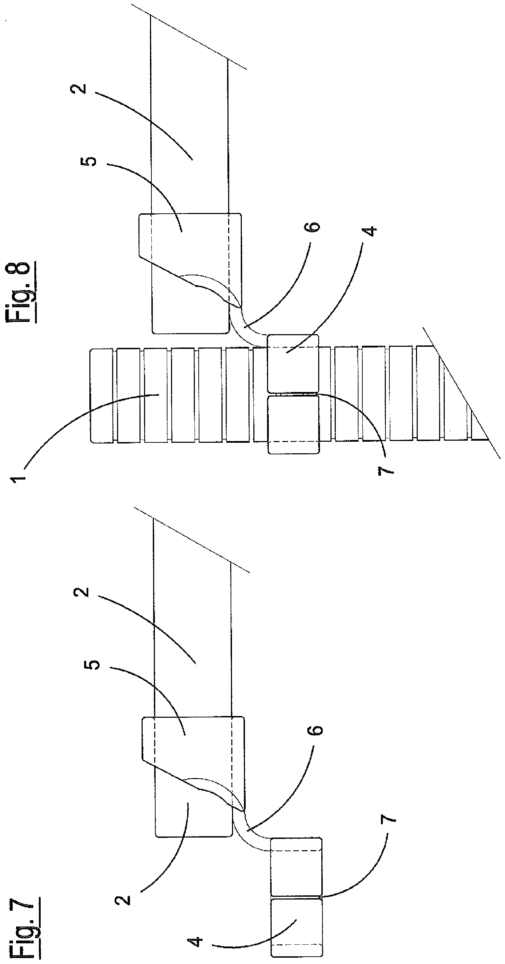

When in use, the device 3 of figures 1, 3 and 4 is pre-assembled on the spacer 2, outside the patient's mouth, by inserting its second ring 5 onto the respective end of the same spacer 2 (figure 7). When an analogous device 3 is assembled, in the same way, on the remaining end of the spacer, this is positioned inside the patient's mouth and anchored to the cylinder 1 by means of the first ring 4 remaining free (figure 8). The temporary reciprocal anchorage between cylinder 1 and the respective end of the spacer 2 is therefore ensured by the above rings 4 and 5, in turn joined by means of the bar 6. The flexible nature of this bar allows the correct orientation of the spacers on the cylinders, whereas the cut 7, which is present on the same rings 4 and 5, allows them to be enlarged, when necessary, and thus exert the necessary retention force for withholding them on the body of the cylinder and on that of the respective spacer.

Once the position key has been thus pre-assembled in the patient's mouth, the definitive fixing of the spacers to the cylinders is effected by immersion of the same, together with the temporary anchoring devices 3, in a depth of polymeric material, which subsequently hardens for the purpose.

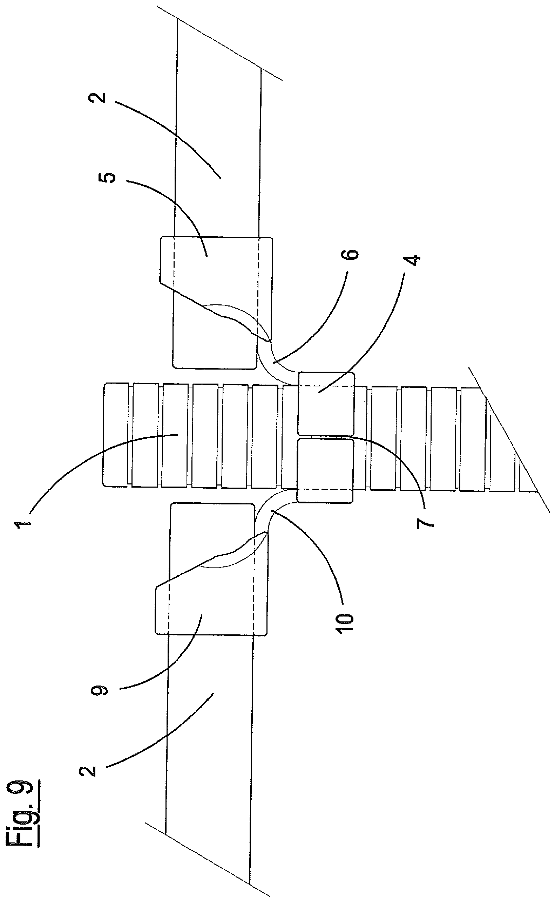

With analogous operations to those described above, the variant of the device 8 of figures 2,5,6 and 9 is anchored with its ring 4 to the central cylinder 1 and with the remaining rings 5 and 9 to the respective spacers 2. Finally, the respective bars 6 and 10 keep all of these parts joined to each other.

Having thus described the device of the present invention in accordance with the principles of the present invention it should be apparent to those skilled in the art that various additional objects and advantages have been attained by the invention and that a variety of modifications can be made within the scope of the present invention, being limited by the following appended claims only.

## Claims

1. A temporary anchoring device adapted to be engaged between one cylinder (1) and one or two spacers (2) of a position keys for dental implants composed of cylinders (1) and spacers (2), equipped with means suitable for temporarily holding said cylinders (1) and the mentioned spacers (2) in their relative position, corresponding to that of the dental implant, wherein said means consist of a first ring (4) destined for being engaged on the body of said cylinder (1), and at least a second ring (5) which is engaged on a first spacer (2) of the position key and joined to the previous ring (4) by means of a bar (6), said device being made of a flexible material and said rings (4, 5) being equipped with an axial cut (7).

2. The device according to claim 1, **characterized in that** said means also comprise a third ring (9) suitable for being engaged on a second spacer (2) of the above-mentioned position key, there also being a bar (10) for joining said third ring (9) to the mentioned first ring (4), the latter assembled on said cylinder (1).

3. Assembly comprising a position key for dental implants composed of cylinders (1) and spacers (2) and a temporary anchoring device according to claim 1 or 2, said device being adapted to engage on a first spacer (2) or a first and second spacers (2) of the position key and to be engaged on the body of one of said cylinders (1).

## Patentansprüche

1. Temporäre Verankerungsvorrichtung, die zum Eingriff zwischen einem Zylinder (1) und einem oder zwei Abstandhaltern (2) eines Positionsschlüssels für Dentalimplantate, die aus Zylindern (1) und Abstandhaltern (2) bestehen, angepasst ist, die mit einem Mittel ausgestattet ist, das zum temporären Halten der Zylinder (1) und der Abstandhalter (2) in ihrer Relativposition entsprechend der des Dentalimplantat geeignet ist, wobei das Mittel aus einem ersten Ring (4), der zum Eingriff an dem Körper des Zylinders (1) bestimmt ist, und zumindest einem zweiten Ring (5) besteht, der an einem ersten Abstandhalter (2) des Positionsschlüssels in Eingriff steht und mit dem vorhergehenden Ring (4) mittels einer Stange (6) verbunden ist, wobei die Vorrichtung aus einem flexiblen Material besteht und die Ringe (4,5) mit einem axialen Schnitt (7) ausgestattet sind.

2. Vorrichtung nach Anspruch 1, **dadurch gekennzeichnet, dass** das Mittel auch einen dritten Ring (9) umfasst, der zum Eingriff an einem zweiten Abstandhalter (2) des Positionsschlüssels geeignet ist, wobei auch eine Stange (10) zum Verbinden des dritten Rings (9) mit dem ersten Ring (4) vorgesehen ist, wobei der letztere an den Zylinder (1) angebaut ist.

3. Baugruppe mit einem Positionsschlüssel für Dentalimplantate, die aus Zylindern (1) und Abstandhalter (2) bestehen, sowie einer temporären Verankerungsvorrichtung nach einem der Ansprüche 1 oder 2, wobei die Vorrichtung zum Eingriff an einem ersten Abstandhalter (2) oder einem ersten und zweiten Abstandhalter (2) des Positionsschlüssels angepasst ist und an dem Körper von einem der Zylinder (1) in Eingriff steht.

## Revendications

1. Dispositif d'ancrage temporaire adapté pour être engagé entre un cylindre (1) et un ou deux éléments d'écartement (2) de clavettes de position pour des implants dentaires constitués de cylindres (1) et d'éléments d'écartement (2), muni de moyens appropriés pour maintenir temporairement lesdits cylindres (1) et les éléments d'écartement mentionnés (2) dans leur position relative, correspondant à celle de l'implant dentaire, où lesdits moyens sont constitués d'une première bague (4) destinée à être engagée sur le corps dudit cylindre (1), et d'au moins une seconde bague (5) qui est engagée sur un premier élément d'écartement (2) de la clavette de position et reliée à la bague précédente (4) au moyen d'une barre (6), ledit dispositif étant fait d'un matériau flexible et lesdites bagues (4, 5) étant munies d'une découpe axiale (7).

2. Dispositif selon la revendication 1, **caractérisé en ce que** lesdits moyens comprennent également une troisième bague (9) adaptée pour être engagée sur un second élément d'écartement (2) de la clavette de position précitée, une barre (10) étant également prévue pour relier ladite troisième bague (9) à la première bague mentionnée (4), cette dernière étant assemblée sur ledit cylindre (1).

3. Ensemble comprenant une clavette de position pour des implants dentaires constitués de cylindres (1) et d'éléments d'écartement (2), et un dispositif d'ancrage temporaire selon la revendication 1 ou 2, ledit dispositif étant adapté pour être engagé sur un premier élément d'écartement (2) ou sur un premier et un second éléments d'écartement (2) de la clavette de position et pour être engagé sur le corps de l'un desdits cylindres (1).
